# EUROPEAN PATENT SPECIFICATION

(11) **EP 3 431 396 B1**
(45) Date of publication and mention of the grant of the patent: **30.03.2022**
(21) Application number: 18184960.5
(22) Date of filing: 23.07.2018
(51) Int. Cl.: B64D 37/16, B64D 37/32, B64F 1/28

(54) **SYSTEMS AND METHODS FOR ORGANIC COMPOUND STORAGE AND TRANSFER**
SYSTEME UND VERFAHREN ZUR AUFBEWAHRUNG UND ZUM TRANSFER ORGANISCHER VERBINDUNGEN
SYSTÈMES ET PROCÉDÉS DE STOCKAGE ET DE TRANSFERT DE COMPOSÉS ORGANIQUES

(30) Priority: 21.07.2017 US 201715656925
(43) Date of publication of application: 23.01.2019
(73) Proprietor: Hamilton Sundstrand Corporation, Charlotte, NC 28217-4578 (US)
(72) Inventor: RHEAUME, Jonathan, West Hartford, CT Connecticut 06119 (US); CORDATOS, Haralambos, Colchesster, CT Connecticut 06415 (US)
(74) Representative: Dehns

(56) References cited:
- US-A- 3 102 972
- US-A1- 2004 194 848
- US-A1- 2005 151 019
- US-A1- 2016 009 407

## Description

### SYSTEMS AND METHODS FOR ORGANIC COMPOUND STORGAGE AND TRANSFER

### BACKGROUND OF THE INVENTION

### 1. Field of the Invention

The present disclosure relates to storage systems, and more particularly to storage systems for organic compounds, such as fuel storage systems for stabilized fuel.

### 2. Description of Related Art

Fuel can be stabilized off-board of air vehicles and then transferred to fuel tanks on-board of the air vehicles. This tends to make the stabilized fuel susceptible to oxygen and other gases and vapors re-dissolving into the fuel during fueling or in storage on- or off-board the air vehicle. Oxygen and other gases and vapors dissolved in the fuel can reduce the effectiveness of the fuel in some instances, for example, when fuel is being used as a heat sink. Dissolved oxygen in fuel participates in auto-oxidation reactions that can lead to the formation of carbonaceous solids that can adversely affect the performance of fuel systems.

The conventional techniques for providing stabilized fuel have been considered satisfactory for their intended purpose, however, the fuel stabilization units have typically been too bulky for aerospace applications. As a result, there is an ever present need for improved storage and transferring of stabilized fuel. This disclosure provides a solution for this need.

US 2004/0194848 A1 discloses a fuel storage and transfer system comprising bulk storage tanks wherein fuel is deoxygenated and from which the deoxygenated fuel can be transfered to on-board fuel tanks and further comprising a highly nitrogen enriched air supply facility which can be connected to head space ports of the on-board fuel tanks.

### SUMMARY OF THE INVENTION

A method for mitigating gas and vapor absorption into organic compounds is provided as defined by claim 1.

In accordance with some embodiments, degassing the organic compound includes degassing by using a membrane. Supplying inert gas to the storage receptacle can include supplying enough inert gas to generate an inert atmosphere with less than 1 % O₂ by volume.

In accordance with some embodiments, the method includes continuing to supply the inert gas to the storage receptacle after filling to prevent contamination after filling. The method can include pre-purging the storage receptacle by supplying inert gas to the storage receptacle before transferring the degassed organic compound.

It is contemplated that the storage receptacle can be an on-board bladder tank, a hermetically sealed on-board fuel tank, and/or a vented on-board fuel tank. The storage receptacle can be a tank, storage vessel, product package, container, or bladder for at least one of a comestible product, an essential oil, or an infused oil.

In accordance with another aspect, an organic compound storage and transfer system is provided as defined by claim 7.

It is contemplated that the storage receptacle can be an on-board storage receptacle, a vented storage receptacle, or a hermetically sealed storage receptacle. The storage receptacle can be a bladder. The bladder can comprise an elastomeric material. The inert gas source can comprise primarily N₂. The inert gas source can be a catalytic oxidation system, or an electrochemical gas separation system. It is contemplated that the inert gas source can be in fluid communication with an inlet at a bottom of the storage receptacle to provide an inert gas thereto.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

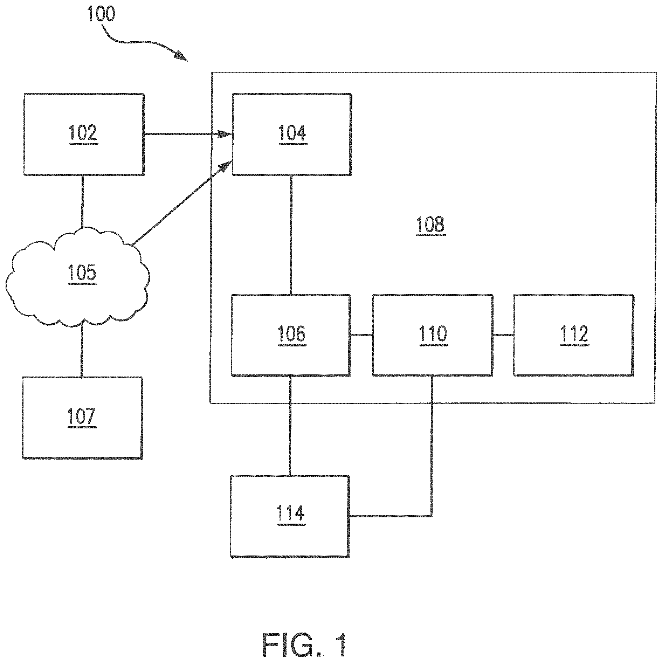

Fig. 1 is a schematic view of an exemplary embodiment of a system constructed in accordance with the present disclosure, showing a system for the generation, storage, and transfer of de-gassed organic compounds.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a schematic depiction of an exemplary embodiment of an organic compound storage and transfer system in accordance with the disclosure is shown in Fig. 1 and is designated generally by reference character 100. The systems and methods described herein can be used to store organic compounds, such as stabilized fuel, so that gasses such as oxygen and other vapors in the ullage do not re-dissolve into fuel. De-gassing fuel and other organic compounds and keeping them gas-free is important for several purposes. These include keeping fuel stabilized to be used as a heat sink, prevent water ingress, and to obviate vapor lock. Those skilled in the art will readily appreciate that removing oxygen from fuel by selected methods can also remove dissolved water and other gases, and the same storage methods are applicable.

As shown in Fig. 1, an organic compound storage, and transfer system 100 includes an organic compound source 102. A degassed organic compound from organic compound source 102 includes an O₂ content less than or equal to 50% of the saturated value of the organic compound. The organic compound, for example, can be stabilized fuel. In accordance with some embodiments, organic compound source 102 includes an O₂ content less than 30% of the saturated value of the organic compound. For example, for stabilized fuel, the O₂ content can be equivalent to 35 ppm by weight (ppmw) O₂ at room temperature, 20 ppmw O₂ at room temperature, or less than 10 ppmw, in accordance with some embodiments. Kerosene-based fuels, such as jet A and jet A-1, have a saturated value, e.g. its O₂ content in an unstabilized state, of approximately 70 ppm O₂ by weight at room temperature. A storage receptacle 104 is in fluid communication with organic compound source 102. Storage receptacle 104 is shown on-board, e.g. on-board an aircraft 108. An off-board storage receptacle 105 can also be used. Off-board storage receptacle 105 can be in fluid communication with storage receptacle 104 or it can be independent thereof. It is contemplated that off-board storage receptacle can be on a land-vehicle such as a truck or trailer, or a storage facility. Off-board storage receptacle 105 is shown as a bladder made from an elastomeric material. It is contemplated that receptacle 105 can be in fluid communication with storage receptacle 104 or it can be independent thereof. Those skilled in the art will readily appreciate that degassing an organic compound to generate a degassed organic compound can include removing some gases such as O₂, for example by sparging with nitrogen, or can include removing all gasses, including O₂ and N₂, for example by vacuum based methods with membranes.

An inert gas source 106 is in fluid communication with storage receptacle 104 to purge storage receptacle 104 of other gasses and vapors. Inert gas source 106 can pre-purge receptacle 104, continuously purge receptacle 104 during filling, and continuously purge receptacle 104 after filling to prevent contamination, e.g. contamination via vent in a vented fuel tank, typically found on commercial aircraft. It is also contemplated that some oxygen that may be present in the inert gas may infuse into the organic compound, e.g. fuel, during transfer and storage. The oxygen transfer from the inert gas to organic compound can be mitigated, for example, by avoiding droplet formation of liquid hydrocarbon fuel (don't spray, but rather fill below the fuel/air interface to minimize surface area of liquid organic compound exposed to inert gas). Inert gas source 106 is an on-board inert gas generating system (IGGS 106). A load compressor 110 is in fluid communication with IGGS 106 to provide compressed air to IGGS 106. Load compressor 110 and IGGS 106 are powered by at least one of an APU 112 on aircraft 108 or ground power 114. Those skilled in the art will recognize that traditional inerting systems on aircraft tend to only be operational while propulsion engines are on, while embodiments of the present invention can be used while the propulsion engines are off, e.g. during re-fueling of the aircraft.

Those skilled in the art will readily appreciate that inert gas source 106 can be a variety of modules or systems. For example, air separation modules, technology that uses selectively permeable membranes and compressed air to separate oxygen from air and thus generate inert gas, can be used. Catalytic oxidation units that create an inert gas by combusting some fuel to deplete the oxygen content in air can be used. The resulting inert gas must be dried prior to introduction into a fuel tank. In some embodiments, an electrochemical gas separation unit, for example, that described in U.S. Patent No. 9,623,981 can be used. It is also contemplated that a pressure-swing adsorption system can be used.

With continued reference to Fig. 1, off-board storage receptacle 105 optionally has an inert gas source 107 that is also off-board. Storage receptacles 104 and 105 can be vented storage receptacles, like a vented fuel tank described above, or hermetically sealed, like fuel tanks found on military aircraft. Those skilled in the art will readily appreciate that storage receptacle 104 can be a bladder style such as a fuel cell bladder, like receptacle 105 and receptacle 105 can be a tank style receptacle like receptacle 104. It is also contemplated that storage receptacle 104 and receptacle 105 can be variable volume bladders and/or other variable volume storage style tanks. It is contemplated that inert gas source 106 can comprise primarily N2. Additionally, storage receptacles 104 and 105 can be tanks, storage vessels (such as bottles), and/or bladders for a variety of organic products, such as plant-based oils, including comestible products (e.g. olive oil), essential oils (e.g. tea tree oil), and infused oils (e.g. calendula oil), other types of fuels such as kerosene-based jet fuel, diesel fuel, biodiesel fuel, and the like, and petroleum-based products such as those found in lotions, cosmetics, and the like. System 100 can be used to process and/or store the variety of organic products listed above.

A method for mitigating gas and vapor absorption into organic compounds includes degassing an organic compound to generate a degassed organic compound that includes an O₂ content less than or equal to 50% of the saturated value of the organic compound. For example. for kerosene-based fuel, this can be less than 20 ppmw O₂, or less than 10 ppmw O₂ in accordance with some embodiments. The O₂ content will vary depending on the saturated value of the compound, the saturated value of the compound can vary based on temperature of the compound. The method includes degassing the organic compound by using a membrane. This and other methods of degassing are described, for example, in U.S. Patent Nos. 6,315,815, 6,709,492, 7,393,388, and 7,465,336. In these systems, however, after degassing, the organic compound, e.g. fuel, is transported directly into use.

The method includes transferring the degassed organic compound from an organic compound source, e.g. the organic compound source 102, while preventing contamination of the organic compound through absorption of gaseous species including water vapor. The method includes transferring the degassed organic compound from the organic compound source into storage by pumping the degassed organic compound into a storage receptacle, e.g. storage receptacle 104 or 105, while continuously supplying inert gas to the storage receptacle. This transferring can be, for example, from the organic compound source off-board an aircraft, e.g. aircraft 108, to a receptacle, e.g. storage receptacle 104, on-board the aircraft. The transferring can be from an on-board organic compound source as well. It is also contemplated that the organic compound source can be off-board the aircraft and transferred to a receptacle, e.g. storage receptacle 105, off-board the aircraft. The method includes pre-purging the storage receptacle by supplying inert gas to the storage receptacle before transferring the degassed organic compound.

The inert gas is supplied by using an on-board inert gas generating system, e.g. IGGS 106. or, not according to claims 1 and 7, an off-board inert gas source, e.g. inert gas source 107. It is contemplated that the IGGS or other inert gas source generates an atmosphere in the ullage with less than 1% O₂ by volume, or less than 0.5% O₂ in accordance with some embodiments. The IGGS receives compressed air from a load compressor, e.g. load compressor 110. The method includes continuing to supply the inert gas to the storage receptacle after filling to assist in preventing contamination after filling. The amount and/or rate of post-fill inert gas supply will depend on the size and fluid activity in the storage receptacle. For example, certain large, ground-based storage tanks (wherein the liquid is largely stagnant) may require very minimal post-fill inert gas supply, since the diffusion of gases back into the liquid is very slow. It is contemplated that the purging and continuous inert gas supply during filling and after can be provided without propulsion engines of the system, e.g. the aircraft, on, as the load compressor is powered by an APU, e.g. APU 112 or ground power, e.g. ground power supply 114. In accordance with some embodiments. inert gas may be supplied to an inlet at a bottom of the storage receptacle, e.g. storage receptacle 104 or 105. This embodiment would be in scenarios where the inert gas has sufficient pressure to overcome the head of the liquid in the receptacle. It is contemplated that this embodiment would afford an additional sparging effect, which may be desirable in certain situations (e.g. when the liquid is only partially degassed while entering the tank).

The methods and systems of the present disclosure, as described above and shown in the drawings, provide for storage receptacles with superior properties including the ability to store organic compounds, such as stabilized fuel, so that gasses - such as oxygen, and other vapors in the ullage do not re-dissolve into fuel. This allows for heavy and costly de-gassing equipment to be removed from the aircraft, reducing weight and cost compared to traditional techniques where fuel is degassed on-board and directly put to use, e.g. no intermediate storage. While the apparatus and methods of the subject disclosure have been shown and described with reference to preferred embodiments, those skilled in the art will readily appreciate that changes and/or modifications may be made thereto without departing from the scope of the appended claims.

## Claims

1. A method for mitigating gas and vapor absorption into organic compounds, the method comprising:
degassing an organic compound to generate a degassed organic compound that includes an O₂ content less than or equal to 50% of a saturated value of the organic compound;
transferring the degassed organic compound while preventing contamination of the organic compound through gas absorption; and
storing the degassed organic compound in a storage receptacle to mitigate gas and vapor absorption, further comprising supplying inert gas to the storage receptacle, wherein transferring the degassed organic compound includes pumping the degassed organic compound into the storage receptacle supplied with the inert gas, wherein supplying inert gas to the storage receptacle includes supplying the inert gas with an on-board inert gas generating system (IGGS), wherein the IGGS receives compressed air from a load compressor powered by at least one of an auxiliary power unit (APU) or ground power.

2. A method as recited in Claim 1, wherein degassing the organic compound includes degassing by using a membrane.

3. A method as recited in Claim 1 or 2, wherein supplying inert gas to the storage receptacle includes supplying enough inert gas to generate an inert atmosphere with less than 1 % O₂ by volume.

4. A method as recited in any preceding claim, further comprising continuing to supply the inert gas to the storage receptacle after filling to prevent contamination after filling.

5. A method as recited in any preceding claim, further comprising pre-purging the storage receptacle by supplying inert gas to the storage receptacle before transferring the degassed organic compound.

6. A method as recited in any preceding claim, wherein the storage receptacle is at least one of an on-board bladder tank, a hermetically sealed on-board fuel tank, or a vented on-board fuel tank; or wherein the storage receptacle is a tank, storage vessel, product package, container, or bladder for at least one of a comestible product, an essential oil, or an infused oil.

7. An organic compound storage and transfer system comprising:
an organic compound source (102), wherein an organic compound from the organic compound source includes an O₂ content less than or equal to 50% of a saturated value of the organic compound;
a membrane adapted to degas the organic compound to obtain the O₂ content;
a storage receptacle (104) in fluid communication with the organic compound source; and
an inert gas source (106) in fluid communication with the storage receptacle to purge the storage receptacle of other gasses and vapors; wherein the inert gas source (106) is an on-board inert gas generating system (IGGS); and further comprising a load compressor (110) in fluid communication with the IGGS to provide compressed air to the IGGS, wherein the load compressor is adapted to be powered by at least one of an APU or ground power.

8. A system as recited in Claim 7, wherein the storage receptacle is at least one of an on-board storage receptacle, a vented storage receptacle, or a hermetically sealed storage receptacle.

9. A system as recited in any of Claims 7 and 8, wherein the storage receptacle is a bladder; and preferably wherein the bladder comprises an elastomeric material.

10. A system as recited in any of Claims 7 to 9, wherein the inert gas source comprises primarily N₂, or wherein the inert gas source is a catalytic oxidation system, or wherein the inert gas source is an electrochemical gas separation system; and/or wherein the inert gas source is in fluid communication with an inlet at a bottom of the storage receptacle to provide an inert gas thereto.

## Patentansprüche

1. Verfahren zum Abschwächen von Gas- und Dampfabsorption in organische Verbindungen, wobei das Verfahren Folgendes umfasst:
Entgasen einer organischen Verbindung, um eine entgaste organische Verbindung zu generieren, die einen O₂-Gehalt von weniger als oder gleich 50 % eines gesättigten Werts der organischen Verbindung beinhaltet;
Transferieren der entgasten organischen Zusammensetzung, während eine Kontamination der organischen Zusammensetzung durch Gasabsorption verhindert wird; und
Aufbewahren der entgasten organischen Zusammensetzung in einem Aufbewahrungsbehälter, um Gas- und Dampfabsorption abzuschwächen,
ferner umfassend Zuführen von Inertgas in den Aufbewahrungsbehälter, wobei das Transferieren der entgasten organischen Zusammensetzung Pumpen der entgasten organischen Zusammensetzung in den Aufbewahrungsbehälter, dem das Inertgas zugeführt wurde, beinhaltet, wobei das Zuführen von Inertgas in den Aufbewahrungsbehälter Zuführen des Inertgases mit einem bordseitigen Inertgasgenerierungssystem (IGGS) beinhaltet, wobei das IGGS Druckluft von einem Ladekompressor aufnimmt, der durch mindestens eines von einer Hilfsleistungseinheit (auxiliary power unit - APU) oder Bodenstrom angetrieben wird.

2. Verfahren nach Anspruch 1, wobei das Entgasen der organischen Zusammensetzung Entgasen unter Verwendung einer Membran beinhaltet.

3. Verfahren nach Anspruch 1 oder 2, wobei das Zuführen von Inertgas in den Aufbewahrungsbehälter Zuführen von ausreichend Inertgas beinhaltet, um eine Inertatmosphäre mit weniger als 1 Volumen-% O₂ zu generieren.

4. Verfahren nach einem der vorstehenden Ansprüche, ferner umfassend Fortsetzen des Zuführens des Inertgases in den Aufbewahrungsbehälter nach einem Füllen, um eine Kontamination nach dem Füllen zu verhindern.

5. Verfahren nach einem der vorstehenden Ansprüche, ferner umfassend Vorspülen des Aufbewahrungsbehälters durch Zuführen von Inertgas in den Aufbewahrungsbehälter vor Transferieren der entgasten organischen Zusammensetzung.

6. Verfahren nach einem der vorstehenden Ansprüche, wobei der Aufbewahrungsbehälter einer von einem bordseitigen Blasentank, einem hermetisch abgedichteten, bordseitigen Kraftstofftank oder einem belüfteten bordseitigen Kraftstofftank ist; oder wobei der Aufbewahrungsbehälter ein Tank, ein Aufbewahrungsgefäß, eine Produktverpackung, ein Container oder eine Blase für mindestens eines von einem Nahrungsmittelprodukt, einem ätherischen Öl oder einem angereicherten Öl ist.

7. Aufbewahrungs- und Transfersystem für eine organische Zusammensetzung, das Folgendes umfasst:
eine Quelle (102) der organischen Zusammensetzung, wobei eine organische Zusammensetzung aus der Quelle der organischen Zusammensetzung einen O₂-Gehalt von weniger als oder gleich 50 % eines gesättigten Werts der organischen Zusammensetzung beinhaltet;
eine Membran, die ausgelegt ist, um die organische Zusammensetzung zu entgasen, um den O₂-Gehalt zu erhalten;
einen Aufbewahrungsbehälter (104) in Fluidverbindung mit der Quelle der organischen Zusammensetzung; und
eine Inertgasquelle (106) in Fluidverbindung mit dem Aufbewahrungsbehälter, um den Aufbewahrungsbehälter von anderen Gasen und Dämpfen zu spülen; wobei die Inertgasquelle (106) ein bordseitiges Inertgasgenerierungssystem (IGGS) ist; und ferner umfassend einen Ladekompressor (110) in Fluidverbindung mit dem IGGS, um dem IGGS Druckluft bereitzustellen, wobei der Ladekompressor ausgelegt ist, um durch mindestens eines von einer APU oder Bodenstrom angetrieben zu werden.

8. System nach Anspruch 7, wobei der Aufbewahrungsbehälter mindestens einer von einem bordseitigen Aufbewahrungsbehälter, einem belüfteten Aufbewahrungsbehälter oder einem hermetisch abgedichteten Aufbewahrungsbehälter ist.

9. System nach einem der Ansprüche 7 und 8, wobei der Aufbewahrungsbehälter eine Blase ist; und wobei die Blase bevorzugt ein Elastomermaterial umfasst.

10. System nach einem der Ansprüche 7 bis 9, wobei die Inertgasquelle vorwiegend N₂ umfasst oder wobei die Inertgasquelle ein katalytisches Oxidationssystem ist oder wobei die Inertgasquelle ein elektrochemisches Gasabscheidungssystem ist; und/oder wobei die Inertgasquelle in Fluidverbindung mit einem Einlass an einem Boden des Aufbewahrungsbehälters steht, um diesem ein Inertgas bereitzustellen.

## Revendications

1. Procédé pour atténuer l'absorption de gaz et de vapeur dans des composés organiques, le procédé comprenant :
le dégazage d'un composé organique pour générer un composé organique dégazé qui comprend une teneur en O₂ inférieure ou égale à 50 % d'une valeur saturée du composé organique ;
le transfert du composé organique dégazé tout en empêchant la contamination du composé organique par absorption de gaz ; et
le stockage du composé organique dégazé dans un réceptacle de stockage pour atténuer l'absorption de gaz et de vapeur,
comprenant en outre la fourniture de gaz inerte au réceptacle de stockage, dans lequel le transfert du composé organique dégazé comprend le pompage du composé organique dégazé dans le réceptacle de stockage alimenté en gaz inerte, dans lequel la fourniture de gaz inerte au réceptacle de stockage comprend la fourniture du gaz inerte avec un système de génération de gaz inerte (IGGS), dans lequel l'IGGS reçoit de l'air comprimé d'un compresseur de charge alimenté par au moins une unité d'alimentation auxiliaire (APU) ou une puissance au sol.

2. Procédé selon la revendication 1, dans lequel le dégazage du composé organique comprend le dégazage à l'aide d'une membrane.

3. Procédé selon la revendication 1 ou 2, dans lequel la fourniture de gaz inerte au réceptacle de stockage comprend la fourniture de suffisamment de gaz inerte pour générer une atmosphère inerte avec moins de 1 % d'O₂ en volume.

4. Procédé selon une quelconque revendication précédente, comprenant en outre la poursuite de l'alimentation en gaz inerte du réceptacle de stockage après le remplissage pour empêcher la contamination après le remplissage.

5. Procédé selon une quelconque revendication précédente, comprenant en outre la prépurge du réceptacle de stockage en fournissant un gaz inerte au réceptacle de stockage avant de transférer le composé organique dégazé.

6. Procédé selon une quelconque revendication précédente, dans lequel le réceptacle de stockage est au moins l'un d'un réservoir à vessie embarqué, d'un réservoir de carburant embarqué hermétiquement scellé ou d'un réservoir de carburant embarqué ventilé ; ou dans lequel le réceptacle de stockage est un réservoir, un récipient de stockage, un emballage de produit, un conteneur ou une vessie pour au moins l'un d'un produit comestible, d'une huile essentielle ou d'une huile infusée.

7. Système de stockage et de transfert de composés organiques comprenant :
une source de composé organique (102), dans lequel un composé organique provenant de la source de composé organique comprend une teneur en O₂ inférieure ou égale à 50 % d'une valeur saturée du composé organique ;
une membrane apte à dégazer le composé organique pour obtenir la teneur en O₂ ;
un réceptacle de stockage (104) en communication fluidique avec la source de composé organique ; et
une source de gaz inerte (106) en communication fluidique avec le réceptacle de stockage pour purger le réceptacle de stockage des autres gaz et vapeurs ; dans lequel la source de gaz inerte (106) est un système de génération de gaz inerte embarqué (IGGS) ; et comprenant en outre un compresseur de charge (110) en communication fluidique avec l'IGGS pour fournir de l'air comprimé à l'IGGS, dans lequel le compresseur de charge est apte à être alimenté par au moins un APU ou une puissance au sol.

8. Système selon la revendication 7, dans lequel le réceptacle de stockage est au moins l'un d'un réceptacle de stockage embarqué, d'un réceptacle de stockage ventilé ou d'un réceptacle de stockage hermétiquement scellé.

9. Système selon l'une quelconque des revendications 7 et 8, dans lequel le réceptacle de stockage est une vessie ; et de préférence dans lequel la vessie comprend un matériau élastomère.

10. Système selon l'une quelconque des revendications 7 à 9, dans lequel la source de gaz inerte comprend principalement du N₂, ou dans lequel la source de gaz inerte est un système d'oxydation catalytique, ou dans lequel la source de gaz inerte est un système de séparation de gaz électrochimique ; et/ou dans lequel la source de gaz inerte est en communication fluidique avec une entrée au fond du réceptacle de stockage pour lui fournir un gaz inerte.
